# EUROPÄISCHE PATENTANMELDUNG

(11) **EP 4 574 244 A1**
(43) Veröffentlichungstag der Anmeldung: **25.06.2025**
(21) Anmeldenummer: 24220567.2
(22) Anmeldetag: 17.12.2024
(51) Int. Cl.: B01D 61/02, B01D 61/12

(54) **UMKEHROSMOSE-ANLAGE FÜR MEDIZINISCHE ANWENDUNGSBEREICHE UND VERFAHREN ZUM BETREIBEN DER UMKEHROSMOSE-ANLAGE**

(30) Priorität: 20.12.2023 DE 102023135960
(71) Anmelder: B. Braun Avitum AG, 34212 Melsungen (DE)
(72) Erfinder: Lieb, Nino, 34212 Melsungen (DE); Odernheimer, Philipp, 34212 Melsungen (DE)
(74) Vertreter: Patentanwälte Ruff, Wilhelm, Beier, Dauster & Partner mbB

(57) **Zusammenfassung**

2.1 Eine derartige Umkehrosmose-Anlage mit wenigstens einer Fluidleitung sowie mit einem Flüssigkeitstank und mit wenigstens einer Filtermembran, die in die wenigstens Fluidleitung eingebunden sind, und mit folgenden, der wenigstens einen Fluidleitung zugeordneten Funktionskomponenten ist bekannt:
- wenigstens eine Drucksensorik,
- wenigstens eine Volumenstromsensorik,
- wenigstens eine Pumpe,
- wenigstens eine elektrisch aktivierbare Fluidsteuerkomponente ohne Signalrückführfunktion.

2.2 Erfindungsgemäß ist eine Funktionsüberprüfungseinrichtung für die wenigstens eine elektrisch aktivierbare Fluidsteuerkomponente vorgesehen, die bei Aktivierung der Fluidsteuerkomponente Sensordaten einer fluidleitungsseitig benachbarten Druck- oder Volumenstromsensorik erfasst und zeitabhängig auswertet.

2.3 Einsatz für medizinische Anwendungsbereiche

## Beschreibung

Die Erfindung betrifft eine Umkehrosmose-Anlage für medizinische Anwendungsbereiche mit wenigstens eine Fluidleitung sowie mit einem Flüssigkeitstank und mit wenigstens einer Filtermembran, die in die wenigstens eine Fluidleitung eingebunden sind, und mit folgenden, der wenigstens einen Fluidleitung zugeordneten Funktionskomponenten:
- wenigstens eine Drucksensorik,
- wenigstens eine Volumenstromsensorik,
- wenigstens eine Pumpe,
- wenigstens eine elektrisch aktivierbare Fluidsteuerkomponente ohne Signalrückführfunktion, insbesondere wenigstens ein Magnetventil.

Die Erfindung betrifft zudem ein Verfahren zum Betreiben einer derartigen Umkehrosmose-Anlage.

Umkehrosmose-Anlagen für medizinische Anwendungsbereiche sind allgemein bekannt. Um eine Funktionsüberprüfung derartiger Umkehrosmose-Anlagen durchzuführen, werden Systemtests vorgenommen. Voraussetzung dafür ist es, dass die Funktionskomponenten einer solchen Umkehrosmose-Anlage derart gestaltet sind, dass sie auf Anforderung durch eine entsprechende Funktionsprüfungseinrichtung digitale oder analoge elektrische Signale senden können, die anschließend durch die Funktionsprüfungseinrichtung ausgewertet werden. Derartige Systemtests funktionieren nur mit Funktionskomponenten, die eine entsprechende Signalrückführfunktion aufweisen. Elektrisch aktivierbare Fluidsteuerkomponenten wie insbesondere elektromagnetische Schaltventile, kurz Magnetventile genannt, weisen keine derartige Signalrückführfunktion auf, so dass sie mit bekannten Systemtests auch nicht auf ihre Funktion überprüft werden können.

Aufgabe der Erfindung ist es, eine Umkehrosmose-Anlage sowie ein Verfahren zum Betreiben dieser Umkehrosmose-Anlage der eingangs genannten Art zu schaffen, die eine umfassende Funktionsüberprüfung aller Funktionskomponenten mit geringem Aufwand ermöglicht.

Diese Aufgabe wird für die Umkehrosmose-Anlage durch die Merkmale des Anspruchs 1 gelöst. Für das Verfahren zum Betreiben der Umkehrosmose-Anlage wird die der Erfindung zugrunde liegende Aufgabe durch die Merkmale des Anspruchs 11 gelöst.

Erfindungsgemäß ist für die Umkehrosmose-Anlage eine Funktionsüberprüfungseinrichtung für die wenigstens eine elektrisch aktivierbare Fluidsteuerkomponente ohne Signalrückführfunktion vorgesehen, die bei Aktivierung der Fluidsteuerkomponente Sensordaten einer fluidleitungsseitig benachbarten Druck- oder Volumenstromsensorik erfasst und zeitabhängig auswertet. Als Fluidsteuerkomponente ohne Signalrückführfunktion ist insbesondere wenigstens ein elektromagnetisches Schaltventil, nachfolgend Magnetventil genannt, vorgesehen. Falls die entsprechende Fluidsteuerkomponente intakt ist, entsteht bei Aktivierung zwangsläufig eine signifikante Änderung der Datensignale der Drucksensorik und/oder der Volumenstromsensorik. Abhängig von der hydraulischen Konfiguration und des Funktionsüberprüfungsverfahrens kann auch eine Kombination aus Druck und Volumenstrom als Akzeptanzkriterium verwendet werden. Die entsprechende Änderung wird erfasst und führt bei ausreichend hoher Änderung zu dem Ergebnis, dass die Fluidsteuerkomponente, insbesondere das Magnetventil, funktioniert, d.h. intakt ist. Die Erfassung und Auswertung erfolgt zeitabhängig über eine durch die Funktionsüberprüfungseinrichtung vorgegebene Zeitspanne. Sollte eine entsprechende Änderung der Sensorikdaten in dem vorgegebenen Umfang nicht innerhalb dieser Zeitspanne erfolgen, wird die Fluidsteuerkomponente als defekt gewertet. Die erfindungsgemäße Lösung eignet sich insbesondere für Umkehrosmose-Anlagen, die im Bereich der Hämodialyse eingesetzt werden. In gleicher Weise kann die erfindungsgemäße Umkehrosmose-Anlage auch für andere medizinische Anwendungsbereiche eingesetzt werden, für die eine entsprechende Wasseraufbereitung notwendig ist. Die erfindungsgemäße Lösung ermöglicht Aussagen über die Funktionalität der Umkehrosmose-Anlage. Bei entsprechenden Defekten können weitere Maßnahmen wie insbesondere ein Abschalten der Anlage, ein Einleiten eines Notbetriebs und Ähnliches eingeleitet werden. Dadurch, dass die Fluidsteuerkomponenten ohne Signalrückführung regelmäßig für die Funktionsüberprüfung elektrisch aktiviert und demzufolge geöffnet und geschlossen werden, kann ein mechanisches Festsetzen der Fluidsteuerkomponenten wie auch eine größere Keimbildung im Bereich der Fluidsteuerkomponenten vermieden werden. Eine Stillstandszeit dieser Fluidsteuerkomponenten wird durch die erfindungsgemäße Lösung somit zwangsläufig reduziert. Entsprechende Testergebnisse der Funktionsüberprüfung können auch durch Ferndiagnose erfasst werden, wodurch Reparaturen der Umkehrosmose-Anlage schneller und kostengünstiger durchgeführt werden können.

In Ausgestaltung der Erfindung weist die Funktionsüberprüfungseinrichtung eine Auswerteeinheit für die Sensordaten auf, die zeitabhängig Datenänderungen mit Solldaten vergleicht, die bei intakter Fluidsteuerkomponente auftreten. Falls die vorgegebene Zeitspanne überschritten wird, wird davon ausgegangen, dass die entsprechende Fluidsteuerkomponente fehlerbehaftet ist.

In weiterer Ausgestaltung der Erfindung setzt die Auswerteeinheit eine vorbestimmte Höhe einer Datenänderung unabhängig von einem Startniveau der Sensordaten ein, um das Vorliegen einer ausreichenden Funktion zu bestätigen. Die Auswerteeinheit überprüft demzufolge lediglich die Höhe der Änderung der Sensordaten über die vorgegebene Zeitspanne. Zu einem entsprechenden Startniveau wird ein in der Auswerteeinheit hinterlegter Mindestwert addiert. Wird dieser innerhalb der vorgegebenen Zeitspanne erreicht, dann liegt eine intakte Fluidsteuerkomponente vor. Somit liegt ein dynamisches Startniveau vor, das anlagen- und funktionskomponenten-spezifisch vorgegeben werden kann.

In weiterer Ausgestaltung der Erfindung werden die erfassten Sensordaten gespeichert und zur Auswertung von Verschleißzuständen der Funktionskomponenten sowie zur Erstellung eines Verschleißvorhersagemodells herangezogen. Regelmäßig wiederholte Funktionsüberprüfungen der erfindungsgemäßen Umkehrosmose-Anlage ermöglichen die Überwachung des Verschleißes von Funktionskomponenten, wobei Trends zu Öffnungsdauer, Schließdauer oder Sensorikgenauigkeit erfasst werden. Durch den Einsatz von Algorithmen können Verschleißvorhersagen erfolgen oder Änderungen von Funktionswerten verfolgt werden. Die Erstellung von Ferndiagnosen wird hierdurch vereinfacht.

In weiterer Ausgestaltung der Erfindung weist die Funktionsüberprüfungseinrichtung eine Sensorikprüfeinheit auf, die eine elektrische Funktionsüberprüfung der wenigstens einen Druck- oder Volumenstromsensorik anhand elektrischer Eingangssignale der Sensorik vornimmt. Die Druck- oder Volumenstromsensorik ist mit einer Signalrückführfunktion versehen, so dass bei Abfrage der entsprechenden Druck- oder Volumenstromsensorik durch die Sensorikprüfeinheit eine Rückmeldung durch entsprechende Sensorsignale erfolgt. In der Sensorikprüfeinheit erfolgt ein Vergleich dieser Eingangssignale mit vorgegebenen unteren und oberen Grenzwerten. Diese Ausgestaltung wird vorteilhaft eingesetzt, bevor die elektrisch aktivierbare Fluidsteuerkomponente ohne Signalrückführfunktion getestet wird. Wenn das Eingangssignal der Druck- oder Volumenstromsensorik innerhalb dieser Grenzwerte liegt, ist die Druck- oder Volumenstromsensorik intakt.

In weiterer Ausgestaltung der Erfindung weist die Funktionsüberprüfungseinrichtung eine Pumpenprüfeinheit auf, die eine elektrische Funktionsüberprüfung der wenigstens einen Pumpe anhand elektrischer Pumpensignale vornimmt. Auch die wenigstens eine Pumpe weist eine Signalrückführfunktion auf. In der Pumpenprüfeinheit sind obere und untere Grenzwerte vorgegeben. Wenn die von der Pumpe eingehenden elektrischen Pumpensignale innerhalb dieser Grenzwerte liegen, gilt die Pumpe als intakt. Elektrische Pumpensignale können als binäre Pegel, als digitale Signale, als analoge Signale oder als Feldbussignale ausgeführt sein. Diese Signale werden vorzugsweise erhalten von Sicherungsautomaten oder von Frequenzumrichtern entsprechender Pumpen. Analoge Signale können über eine 4-20 mA Signalrückführung einer aktuellen Pumpendrehzahl erfolgen. Die wenigstens eine Pumpe kann frequenzgesteuert sein, so dass eine Pumpendrehzahl veränderbar ist. Die wenigstens eine Pumpe kann aber auch mit gleichbleibender Drehzahl betrieben werden. Eine derartige Pumpe ist nicht frequenzgesteuert. Die Funktionsüberprüfung der wenigstens einen Pumpe erfolgt vorzugsweise ebenfalls vor Überprüfung der Funktion der elektrisch aktivierbaren Fluidsteuerkomponente, insbesondere des wenigstens einen Magnetventils.

In weiterer Ausgestaltung der Erfindung weist die Funktionsüberprüfungseinrichtung eine Tankprüfeinheit auf, die einen Mindestfüllstand des Flüssigkeitstanks überprüft und abhängig von einem Ergebnis der Überprüfung ein Signal ausgibt. Diese Ausgestaltung gewährleistet, dass bei zu geringem Füllstand die wenigstens eine Pumpe nicht trockenlaufen und dadurch beschädigt werden kann. Auch diese Prüfung erfolgt vorzugsweise vor der Funktionsüberprüfung der wenigstens einen elektrisch aktivierbaren Fluidsteuerkomponente ohne Signalrückführfunktion.

In weiterer Ausgestaltung der Erfindung ist eine Pumpensteuervorrichtung vorgesehen, um eine Pumpendrehzahl der wenigstens einen Pumpe zur Erzielung eines stationären Zustands in dem Fluidkreislauf zu erzielen. Ein entsprechender stationärer Zustand wird für die Umkehrosmosereaktion im Bereich der wenigstens einen Filtermembran benötigt. Vorzugsweise weist die Umkehrosmose-Anlage wenigstens zwei Pumpen auf, die durch wenigstens eine Druckpumpe und wenigstens eine Zirkulationspumpe realisiert sind.

In weiterer Ausgestaltung der Erfindung ist der Funktionsüberprüfungseinrichtung eine elektronische Datenverarbeitungseinrichtung zugeordnet, in der wenigstens ein Verschleißmodell für die Funktionskomponenten abgespeichert ist, und die eine Auswerteeinheit aufweist, die Datensätze der eingehenden Sensordaten erfasst und mit dem Verschleißmodell vergleicht sowie auswertet im Hinblick auf eine Versagensvorhersage der Funktionskomponenten. Diese Ausgestaltung ermöglicht einen frühzeitigen Austausch von Funktionskomponenten der Umkehrosmose-Anlage wie auch die Verbesserung der Genauigkeit der Auswertung von Sensordaten der Drucksensorik sowie der Volumenstromsensorik. Die elektronische Datenverarbeitungseinrichtung kann der Funktionsüberprüfungseinrichtung räumlich zugeordnet oder örtlich von dieser getrennt sein. In letzterem Fall erfolgt die Zuordnung insbesondere über eine Cloud-Anbindung.

In weiterer Ausgestaltung der Erfindung ist in der elektronischen Datenverarbeitungseinrichtung eine Prozessdatenanpassung für einen Betrieb der Funktionskomponenten abgelegt, die die Funktionskomponenten abhängig von eingehenden Sensordaten verschleißabhängig steuert oder regelt. Die Prozessdatenanpassung ist vorzugsweise als Software in der Datenverarbeitungseinrichtung abgelegt. Mittels dieser Ausgestaltung ist es möglich, Parameter für den Betrieb der Umkehrosmose-Anlage anzupassen. Durch Bauteilverschleiß bei einzelnen Funktionskomponenten kann sich die Genauigkeit von Verbrauchsdaten verschlechtern. Durch entsprechende Aktualisierung der Werte mittels der beschriebenen Ausgestaltung ist eine Anpassung ermöglicht, die die Genauigkeit der Prozessdaten wiederherstellt. Falls die Höhe eines verbrauchten Permeatvolumenstroms benötigt wird, muss über einen Durchflussbegrenzer fließendes Wasser von einem produzierten Permeatvolumenstrom, gemessen über eine Volumenstromsensorik, abgezogen werden. Durch entsprechenden Bauteilverschleiß kann sich das Volumen des zurückfließenden Permeats über die Zeit ändern. Über die Zeit würde sich dadurch auch die Genauigkeit des verbrauchten Permeatvolumenstroms verschlechtern. Die Prozessdatenanpassung verhindert eine derartige Verschlechterung.

Für das Verfahren zum Betreiben der Umkehrosmose-Anlage der eingangs genannten Art wird die wenigstens eine Fluidsteuerkomponente ohne Signalrückführfunktion elektrisch aktiviert und anschließend auf ihre Funktion überprüft durch eine zeitabhängige Erfassung von fluidleitungsseitig benachbarten Änderungen von Volumenstrom oder Druck der Flüssigkeit. Vorteilhaft erfolgt vor einer elektrischen Aktivierung der Fluidsteuerkomponenten ohne Signalrückführfunktion eine Funktionsüberprüfung der übrigen, der wenigstens einen Fluidleitung zugeordneten Funktionskomponenten durch Erfassung elektrischer Signale der Funktionskomponenten und Vergleich mit unteren und oberen vorgegebenen Grenzwerten und anschließender Ausgabe eines Ergebnisses der Funktionsüberprüfung. Vorteilhaft wird zudem eine Füllstandsüberprüfung des Flüssigkeitstanks durchgeführt, bevor die wenigstens eine Fluidsteuerkomponente ohne Signalrückführfunktion elektrisch aktiviert wird. Vorteilhaft wird auch die wenigstens eine Pumpe angesteuert, um einen stationären Zustand in der wenigstens einen Fluidleitung herzustellen, wobei erst nach Herstellung des stationären Zustands die wenigstens eine Fluidsteuerkomponente ohne Signalrückführfunktion elektrisch aktiviert wird.

Die beschriebenen Reihenfolgen gewährleisten Systemtestsequenzen, die sichere Rückschlüsse auf die Funktion der verschiedenen Funktionskomponenten der Umkehrosmose-Anlage ermöglichen.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch eine Ausführungsform einer erfindungsgemäßen einstufigen Umkehrosmose-Anlage,
- Fig. 2: schematisch eine Ausführungsform einer erfindungsgemäßen zweistufigen Umkehrosmose-Anlage und
- Fig. 3: eine Ausführungsform einer erfindungsgemäßen dreistufigen Umkehrosmose-Anlage.

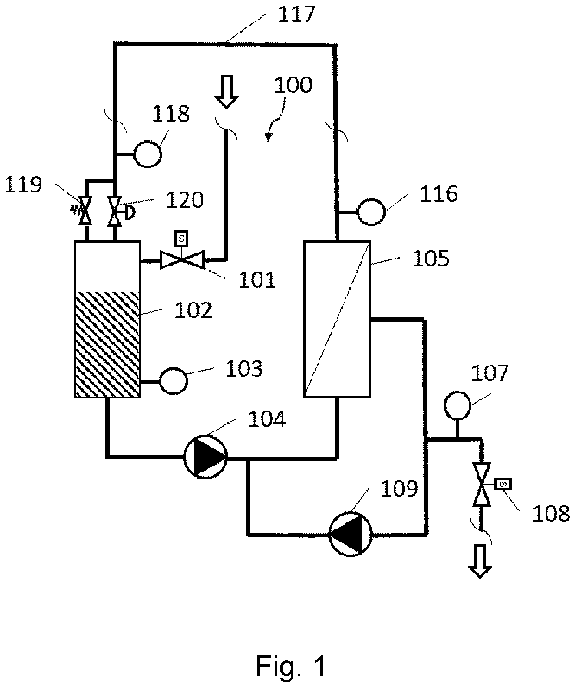

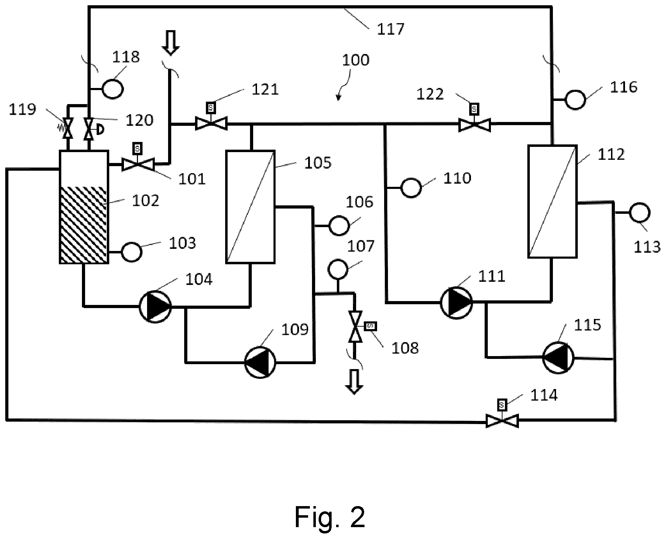

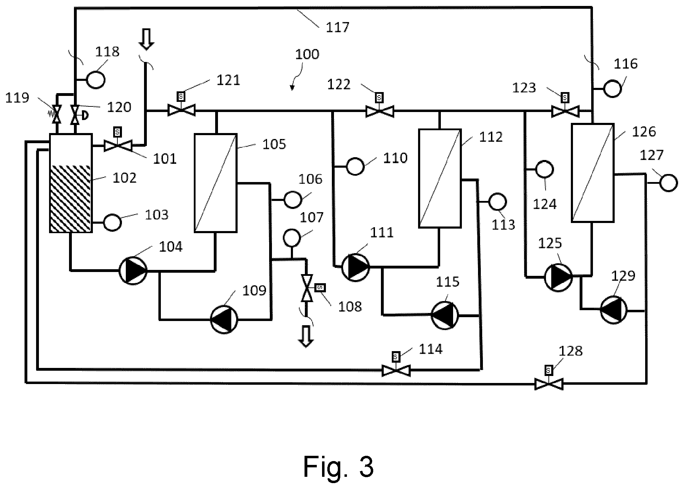

Sowohl die einstufige Umkehrosmose-Anlage nach Fig. 1 als auch die mehrstufigen Umkehrosmose-Anlagen nach den Fig. 2 und 3 sind für medizinische Anwendungsbereiche vorgesehen. Für alle jeweils identischen Funktionskomponenten der verschiedenen Umkehrosmose-Anlagen nach den Fig. 1 bis 3 werden identische Bezugszeichen verwendet. Dabei wird die jeweilige Umkehrosmose-Anlage mit dem Bezugszeichen 100 versehen. Jede Umkehrosmose-Anlage 100 weist einen Flüssigkeitstank 102 auf, von dem aus Flüssigkeit über eine Druckpumpe 104 in eine kreislaufförmige Fluidleitung gebracht wird. Stromabwärts der Druckpumpe 104 ist eine Filtermembran 105 vorgesehen, über die Konzentrat in eine Fluidleitung abgeleitet wird, der eine Zirkulationspumpe 109 zugeordnet ist. Der Zirkulationspumpe 109 ist stromaufwärts ein Volumenstromsensor 106 zugeordnet. Eine Konzentratableitung aus dieser Fluidleitung erfolgt über eine elektrisch aktivierbare Fluidsteuerkomponente ohne Signalrückführfunktion, vorliegend durch ein Magnetventil 108. Dieser Konzentratableitung ist ein weiterer Volumenstromsensor 107 zugeordnet.

Eine Flüssigkeitszufuhr erfolgt bei allen Anlagen gemäß den Fig. 1 bis 3 über eine Zuführleitung, die über ein weiteres Magnetventil 101, d.h. eine weitere elektrisch aktivierbare Fluidsteuerkomponente ohne Signalrückführfunktion, geöffnet oder geschlossen werden kann. Die Zuführleitung mündet in den Flüssigkeitstank 102. Der Flüssigkeitstank 102 ist mit einem Drucksensor 103 versehen, der einen Füllstand des Flüssigkeitstanks 102 erfasst.

Bei der einstufigen Umkehrosmose-Anlage 100 gemäß Fig. 1 ist eine Ringleitung 117 vorgesehen, die Flüssigkeit über eine Fluidleitung zurück in den Flüssigkeitstank 102 führt. In nicht näher dargestellter Weise sind an die Ringleitung 117 Verbraucher angeschlossen, die bei Bedarf Permeat aus dem Kreislauf ziehen. Dieser Fluidleitung ist ein weiterer Drucksensor 118 zugeordnet. Die Fluidleitung ist in Strömungsrichtung vor dem Flüssigkeitstank 102 mit einem Durchflussbegrenzer 120 sowie mit einem parallelgeschalteten Überströmventil 119 versehen. Dem Fluidleitungsabschnitt der Umkehrosmoseanlage, der zur Ringleitung 117 führt, ist ein Volumenstromsensor 116 zugeordnet.

Bei der zweistufigen Umkehrosmose-Anlage 100 gemäß Fig. 2 wird der Aufbau der einstufigen Umkehrosmose-Anlage 100 gemäß Fig. 1 ergänzt um eine weitere Zirkulation und eine weitere Filtermembran 112. Dabei schließt stromabwärts der Filtermembran 105 eine Fluidleitung an, die einen Abzweig zu einer weiteren Druckpumpe 111, einer weiteren Filtermembran 112 sowie eine Zirkulationsleitung mit einer Zirkulationspumpe 115 und einem Volumenstromsensor 113 aufweist. Die entsprechende Ableitung ist direkt mit dem Flüssigkeitstank 102 verbunden, wobei diese Verbindungsleitung über ein Magnetventil 114 absperrbar oder freigebbar ist. Die Zuführleitung für Flüssigkeit weist eine durch ein weiteres Magnetventil 121 absperrbare Leitung auf, die zur zweiten Druckpumpe 111 und zur zweiten Filtermembran 112 führt. Hinter der Ableitung zur zweiten Druckpumpe 111 ist ein weiteres Magnetventil 122 vorgesehen. Stromaufwärts der zweiten Druckpumpe 111 ist ein Drucksensor 110 in die Fluidleitung eingebunden. Stromabwärts der zweiten Filtermembran 112 leitet eine Ringleitung 117 entsprechende Flüssigkeit zurück zum Flüssigkeitstank 102. Der Aufbau aus Durchflussbegrenzer 120 und Überströmventil 119 mit vorgeschaltetem Drucksensor 118 und dem Volumenstromsensor 116 zur Ringleitung 117 ist identisch zur einstufigen Umkehrosmose-Anlage.

Bei der dreistufigen Umkehrosmose-Anlage wird der Aufbau der zweistufigen Umkehrosmose-Anlage verwendet. Zusätzlich ist noch ein dritter Zirkulationskreislauf mit einer dritten Filtermembran 126, einer dritten Druckpumpe 125, einer dritten Zirkulationspumpe 129, einem der Druckpumpe 125 vorgeschalteten Drucksensor 124 und einem der Ableitung der Filtermembran 126 zugeordneten Volumenstromsensor 127 zugeordnet. Eine Rückführleitung zum Flüssigkeitstank 102 ist durch ein Magnetventil 128 absperrbar. Ein Magnetventil 123 ermöglicht je nachdem, ob es geschlossen oder geöffnet ist, die Leitung der Flüssigkeit über den dritten Zirkulationskreislauf oder die Rückführung über die Ringleitung 117 zum Flüssigkeitstank 102. Auch hier sind der Ringleitung 117 in nicht näher dargestellter Weise Verbraucher zugeordnet, die bei Bedarf Permeat aus dem Kreislauf ziehen.

Für alle drei Umkehrosmose-Anlagen 100 ist eine Funktionsüberprüfungseinrichtung vorgesehen, die zeichnerisch nicht dargestellt ist. Mittels der Funktionsüberprüfungseinrichtung werden die Funktionen der einzelnen Funktionskomponenten der Umkehrosmose-Anlagen 100 geprüft und überwacht. Die Funktionsüberprüfungseinrichtung weist eine elektronische Datenverarbeitungseinrichtung auf, die in nachfolgend näher beschriebener Weise mit den einzelnen Funktionskomponenten der Umkehrosmose-Anlage 100 gemäß den Fig. 1 bis 3 verbunden ist.

Um eine Funktionsüberprüfung der einstufigen Umkehrosmose-Anlage 100 vorzunehmen, werden die Druckpumpe 104 und die Zirkulationspumpe 109 gestartet. Anschließend wird das Magnetventil 108 geöffnet. Die Funktionsüberprüfungseinrichtung ist mit dem stromaufwärts benachbarten Volumenstromsensor 107 verbunden. Durch das Öffnen des Magnetventils 108 ändert sich der Volumenstrom in der Fluidleitung. Die entsprechende Änderung des Volumenstroms wird durch den Volumenstromsensor 107 erfasst. Die Funktionsüberprüfungseinrichtung wertet die erfassten Sensordaten zeitabhängig aus. Sobald innerhalb einer vorgegebenen Zeitspanne ein Schwellwert für die Änderung des Volumenstroms erfasst ist, gilt das Magnetventil 108 als intakt. Zur Beendigung des entsprechenden Prüfschritts wird das Magnetventil 108 geschlossen.

Anschließend wird das Magnetventil 101 geöffnet. Der Füllstand des Flüssigkeitstanks 102 wird über den Drucksensor 103 überwacht. Dieser ist mit der Funktionsüberprüfungseinrichtung gekoppelt, genauer mit einer Tankprüfeinheit der Funktionsüberprüfungseinrichtung. Wenn das Magnetventil 101 geöffnet wird, muss sich der Füllstand des Flüssigkeitstanks 102 erhöhen, da dann Flüssigkeit aus der Zuleitung in den Flüssigkeitstank 102 fließen kann. Dadurch erhöht sich der Druck im Flüssigkeitstank 102. Diese Druckänderung wird zeitabhängig über die Funktionsüberprüfungseinrichtung erfasst. Die Funktionsüberprüfungseinrichtung gibt einen Schwellenwert vor, den die Änderung des Drucks des Drucksensors 103 innerhalb einer vorgegebenen Zeitspanne überschreiten muss. Ist dies der Fall, gilt das Magnetventil 101 als intakt. Dabei ist der Schwellenwert, der auch als Pegel bezeichnet wird, dynamisch. Zu Beginn des entsprechenden Prüfschritts wird dieser festgelegt. Dabei wird ein Startniveau bei Beginn der Ventilöffnung verwendet. Zur Festlegung des Schwellwerts wird ein Mindestwert auf dieses Startniveau addiert, so dass sich ein dynamischer Schwellenwert ergibt. Bei Beendigung des Prüfschritts wird das Magnetventil 101 wieder geschlossen.

Anschließend werden die Pumpen, d.h. die Druckpumpe 104 und die Zirkulationspumpe 109, wieder geschlossen.

Bei der zweistufigen Umkehrosmose-Anlage nach Fig. 2 werden ebenfalls bei Start der Testsequenz durch die Funktionsüberprüfungseinrichtung zunächst sowohl die Druckpumpe 104 als auch die Zirkulationspumpe 109 aktiviert. Nach dem Starten der beiden Pumpen 104 und 109 wird analog der Prüfreihenfolge bei der einstufigen Umkehrosmose-Anlage das Magnetventil 108 geöffnet und eine Volumenstromänderung an dem stromaufwärts benachbarten Volumenstromsensor 107 mittels der Funktionsüberprüfungseinrichtung erfasst und ausgewertet. Falls zeitabhängig der vorgegebene Schwellwert für die Volumenstromänderung erreicht wird, wird das Magnetventil 108 wieder geschlossen. Das Magnetventil 108 gilt dann als intakt.

Anschließend wird - ebenfalls analog der einstufigen Umkehrosmose-Anlage - das Magnetventil 101 geöffnet und die Änderung des Füllstands des Flüssigkeitstanks 102 über den Drucksensor 103 überwacht. Abschließend wird das Magnetventil 101 wieder geschlossen, sobald es als intakt gewertet wurde.

In einem nächsten Prüfschritt wird das Magnetventil 122 geöffnet. Eine hierdurch entstehende Druckschwankung wird über den Drucksensor 118 in der Ringleitung 117 überwacht. Wenn sich eine gewünschte Änderung innerhalb der vorgegebenen Zeitspanne einstellt, wird das Magnetventil 122 wieder geschlossen. Es gilt dann als intakt. Dabei wird der Schwellwert, der durch Überwachung des Drucksensors 118 überschritten werden muss, dynamisch festgelegt. Dabei wird das Druckstartniveau verwendet und hierzu ein addierter Mindestwert addiert. Wenn innerhalb der vorgegebenen Zeitspanne der Schwellwert überschritten wird, gilt das Magnetventil 122 als funktionsfähig. Es wird wieder geschlossen.

In einem nächsten Prüfschritt werden die Druckpumpe 111 und die Zirkulationspumpe 115 der zweiten Stufe der Umkehrosmose-Anlage gestartet. Anschließend wird das Magnetventil 114 geöffnet. Die Funktionsüberprüfungseinrichtung überwacht eine entsprechende Volumenstromänderung am stromaufwärts benachbarten Volumenstromsensor 113. Abhängig von der erfassten Volumenstromänderung wertet die Funktionsüberprüfungseinrichtung die Funktionalität des Magnetventils 114 aus. Falls das Magnetfeld 114 intakt ist, bleibt es für den nachfolgenden Prüfschritt geöffnet, um einen Druck in dem entsprechenden Fluidleitungssegment möglichst gering zu halten.

Anschließend werden alle Pumpen, d.h. sowohl die Druckpumpen 104 und 111 als auch die Zirkulationspumpen 109 und 115, gestoppt. Für den nächsten Prüfschritt wird das Magnetventil 121 geöffnet und über den stromabwärts benachbarten Drucksensor 110 überwacht. Bei einem entsprechenden Druckanstieg innerhalb einer vorgegebenen Zeitspanne erkennt die Funktionsüberprüfungseinrichtung, ob das Magnetventil 121 intakt ist. Nach Beendigung dieses Prüfschritts werden sowohl das Magnetventil 114 als auch das Magnetventil 121 geschlossen.

Bei der dreistufigen Umkehrosmose-Anlage gemäß Fig. 3 werden zusätzlich zu den Magnetventilen der zweistufigen Umkehrosmose-Anlage nach Fig. 2 zwei weitere Magnetventile 123 und 128 auf ihre Funktion überprüft. Dabei wird in einem ersten Prüfschritt für diese letzte Stufe das Magnetventil 122 geöffnet. Entsprechende Druckänderungen werden über den Drucksensor 124 im Fluidleitungsabschnitt der dritten Stufe überwacht. Falls die Funktionsüberprüfungseinrichtung analog zu den zuvor beschriebenen Prüfsequenzen auch hier anhand des Drucksensors 124 feststellt, dass das Magnetventil 122 intakt ist, wird in einem weiteren Prüfschritt das Magnetventil 123 geöffnet. Der stromabwärts benachbarte Drucksensor 118 wird durch die Funktionsüberprüfungseinrichtung überwacht. Falls sich die über die vorgegebene Zeitspanne gewünschte Druckänderung gemäß dem vorgegebenen Schwellenwert ergibt, gilt das Magnetventil 123 als intakt.

In einem letzten Prüfschritt wird das Magnetventil 128 geöffnet. Für diesen Prüfschritt ist es notwendig, dass die Pumpen aktiv sind und im Kreislauf einen stationären Zustand erreicht haben. Ein Volumenstrom in diesem Fluidleitungssegment wird über den Volumenstromsensor 127 überwacht, der stromaufwärts des Magnetventils 128 in dem Fluidleitungssegment vorgesehen ist. Auch hier wird analog zu den zuvor beschriebenen Prüfungen durch die Funktionsüberprüfungseinrichtung überwacht, ob sich innerhalb der vorgegebenen Zeitspanne ein Mindestwert einer entsprechenden Volumenstromänderung ergibt. Bejahendenfalls gilt das Magnetventil 128 als intakt.

Anhand der vorstehenden Ausführungen wurde eine definierte Reihenfolge der Schaltung von Aktoren und der Abfrage von Sensoren beschrieben. Grundsätzlich kann von dieser Reihenfolge auch abgewichen werden, sofern dies technisch möglich und zweckmäßig ist.

## Patentansprüche

1. Umkehrosmose-Anlage (100) für medizinische Anwendungsbereiche mit wenigstens einer Fluidleitung sowie mit einem Flüssigkeitstank (102) und mit wenigstens einer Filtermembran (105, 112, 126), die in die wenigstens eine Fluidleitung eingebunden sind, und mit folgenden, der wenigstens einen Fluidleitung zugeordneten Funktionskomponenten:
- wenigstens eine Drucksensorik,
- wenigstens eine Volumenstromsensorik,
- wenigstens eine Pumpe (104, 109, 111, 115, 125, 129),
- wenigstens eine elektrisch aktivierbare Fluidsteuerkomponente ohne Signalrückführfunktion, insbesondere ein Magnetventil (101, 108, 114, 121, 122, 123, 128), **dadurch gekennzeichnet, dass** eine Funktionsüberprüfungseinrichtung für die wenigstens eine elektrisch aktivierbare Fluidsteuerkomponente vorgesehen ist, die bei Aktivierung der Fluidsteuerkomponente Sensordaten einer fluidleitungsseitig benachbarten Druck- oder Volumenstromsensorik erfasst und zeitabhängig auswertet.

2. Umkehrosmose-Anlage (100) nach Anspruch 1, **dadurch gekennzeichnet, dass** die Funktionsüberprüfungseinrichtung eine Auswerteeinheit für die Sensordaten aufweist, die zeitabhängig Datenänderungen mit Solldaten vergleicht, die bei intakter Fluidsteuerkomponente auftreten.

3. Umkehrosmose-Anlage (100) nach Anspruch 2, **dadurch gekennzeichnet, dass** die Auswerteeinheit eine vorbestimmte Höhe einer Datenänderung unabhängig von einem Startniveau der Sensordaten einsetzt, um das Vorliegen einer ausreichenden Funktion zu bestätigen.

4. Umkehrosmose-Anlage (100) nach Anspruch 2 oder 3, **dadurch gekennzeichnet, dass** die erfassten Sensordaten gespeichert und zur Auswertung von Verschleißzuständen der Funktionskomponenten sowie zur Erstellung eines Verschleißvorhersagemodells herangezogen werden.

5. Umkehrosmose-Anlage (100) nach einem der vorhergehenden Ansprüche, **dadurch gekennzeichnet, dass** die Funktionsüberprüfungseinrichtung eine Sensorikprüfeinheit aufweist, die eine elektrische Funktionsüberprüfung der wenigstens einen Druck- oder Volumenstromsensorik anhand elektrischer Eingangssignale der Sensorik vornimmt.

6. Umkehrosmose-Anlage (100) nach einem der vorhergehenden Ansprüche, **dadurch gekennzeichnet, dass** die Funktionsüberprüfungseinrichtung eine Pumpenprüfeinheit aufweist, die eine elektrische Funktionsüberprüfung der wenigstens einen Pumpe (104, 109, 111, 115, 125, 129) anhand elektrischer Pumpensignale vornimmt.

7. Umkehrosmose-Anlage (100) nach einem der vorhergehenden Ansprüche, **dadurch gekennzeichnet, dass** die Funktionsüberprüfungseinrichtung eine Tankprüfeinheit aufweist, die einen Mindestfüllstand des Flüssigkeitstanks (102) überprüft und abhängig von einem Ergebnis der Überprüfung ein Signal ausgibt.

8. Umkehrosmose-Anlage (100) nach einem der vorhergehenden Ansprüche, **dadurch gekennzeichnet, dass** eine Pumpensteuervorrichtung vorgesehen ist, um eine Pumpendrehzahl der wenigstens einen Pumpe (104, 109, 111, 115, 125, 129) zur Erzielung eines stationären Zustands in der wenigstens einen Fluidleitung zu steuern oder zu regeln.

9. Umkehrosmose-Anlage (100) nach einem der vorhergehenden Ansprüche, **dadurch gekennzeichnet, dass** die Funktionsüberprüfungseinrichtung eine elektronische Datenverarbeitungseinrichtung aufweist, in der wenigstens ein Verschleißmodell für die Funktionskomponenten abgespeichert ist, und die eine Auswerteeinheit aufweist, die Datensätze der eingehenden Sensordaten erfasst und mit dem Verschleißmodell vergleicht sowie auswertet im Hinblick auf eine Versagensvorhersage der Funktionskomponenten.

10. Umkehrosmose-Anlage (100) nach Anspruch 9, **dadurch gekennzeichnet, dass** in der elektronischen Datenverarbeitungseinrichtung eine Prozessdatenanpassung für einen Betrieb der Funktionskomponenten abgelegt ist, die die Funktionskomponenten abhängig von eingehenden Sensordaten verschleißabhängig steuert oder regelt.

11. Verfahren zum Betreiben einer Umkehrosmose-Anlage (100) nach dem Oberbegriff des Anspruchs 1, **dadurch gekennzeichnet, dass** die wenigstens eine Fluidsteuerkomponente ohne Signalrückführfunktion elektrisch aktiviert und anschließend auf ihre Funktion überprüft wird durch eine zeitabhängige Erfassung von fluidleitungsseitig benachbarten Änderungen von Volumenstrom oder Druck der Flüssigkeit.

12. Verfahren nach Anspruch 11, **dadurch gekennzeichnet, dass** vor einer elektrischen Aktivierung der Fluidsteuerkomponente ohne Signalrückführfunktion eine Funktionsüberprüfung der übrigen, dem Fluidkreislauf zugeordneten Funktionskomponenten erfolgt durch Erfassung elektrischer Signale der Funktionskomponenten und Vergleich mit unteren und oberen vorgegebenen Grenzwerten und anschließender Ausgabe eines Ergebnisses der Funktionsüberprüfung.

13. Verfahren nach Anspruch 11 oder 12, **dadurch gekennzeichnet, dass** eine Füllstandsüberprüfung des Flüssigkeitstanks durchgeführt wird, bevor die wenigstens eine Fluidsteuerkomponente ohne Signalrückführfunktion elektrisch aktiviert wird.

14. Verfahren nach einem der Ansprüche 11 bis 13, **dadurch gekennzeichnet, dass** die wenigstens eine Pumpe (104, 109, 111, 115, 125, 129) angesteuert wird, um einen stationären Zustand in der wenigstens einen Fluidleitung herzustellen, und dass nach Herstellung des stationären Zustands die wenigstens eine Fluidsteuerkomponente ohne Signalrückführfunktion, insbesondere das wenigstens eine Magnetventil (101, 108, 114, 121, 122, 123, 128), elektrisch aktiviert wird.
